Europäisches Patentamt

European Patent Office

Office européen des brevets

(19)

(11) Publication number: **0 247 336**
**A2**

# EUROPEAN PATENT APPLICATION

(12)

(21) Application number: 87105099.3

(51) Int. Cl.⁴: **F16K 11/07**

(22) Date of filing: **07.04.87**

(30) Priority: **01.05.86 US 858581**

(43) Date of publication of application:
**02.12.87 Bulletin 87/49**

(84) Designated Contracting States:
**BE DE ES FR GB IT SE**

(71) Applicant: **Sealed Power Corporation**
**100, Terrace Plaza**
**Muskegon Michigan 49443(US)**

(72) Inventor: **Carter, Ronald E.**
**1562 Cornell Road**
**Muskegon, MI 49441(US)**
Inventor: **Hendrixon, John L.**
**367 South 72nd Avenue**
**Shelby, MI 49455(US)**

(74) Representative: **Blumbach Weser Bergen**
**Kramer Zwirner Hoffmann Patentanwälte**
**Sonnenbergerstrasse 43**
**D-6200 Wiesbaden 1(DE)**

(54) **Electrohydraulic controlled spool valve.**

(57) An electrohydraulic control system comprising a spool valve including a valve body having a bore. A spool is positioned in the bore for reciprocating movement within the bore. The valve body has an inlet, an outlet and an exhaust port. An electrohydraulic three-way pulse width modulated valve has an inlet communicating with the inlet to the valve body and an outlet communicating with one end of the spool. A spring yieldingly urges the spool toward the pulse width modulated valve. The spool is positioned so that it normally obstructs a path from the inlet to the outlet. Provision is made for preventing undesirable metering flow to exhaust when the valve is in the full on position.

FIG.1

# ELECTROHYDRAULIC CONTROLLED SPOOL VALVE

This invention relates to electrohydraulic control systems and particularly to such systems for energizing and de-energizing heavy duty automatic transmission clutches.

## Background and Summary of the Invention

Control of the gear shift points for changing from one gear to another in heavy duty automatic transmissions of the type used in trucks, buses and off road equipment historically have been controlled by mechanical inputs such as centrifugal governors monitoring engine speed and driveshaft speed along with throttle position and, in some instances, output shaft torque.

The shift point from transmission to transmission for any given set of conditions varies significantly due to the inherent manufacturing tolerances and the calibration of the various mechanical linkage components. The mechanical inputs active pilot spool valves which, in turn, control main spool valves to energize and de-energize the various clutches as the transmission shifts from one gear to the next. Since the spool valves are activated mainly in an ON/OFF mode with little or no pressure regulation between the extremes, the shifts tend to be quite abrupt causing torque spikes in the transmission output and high pressure clutch slippage resulting in clutch face wear.

By electronically monitoring engine speed, output speed and torque, and throttle position, it is possible with an inexpensive microcomputer to calculate the exact shift point required for any set of conditions and to control an electrohydraulic device to energize and/or de-energize the appropriate clutches when shifting from one gear to another. The clutch for the desired gear is engaged as the clutch for the undesirable gear is being de-energized. In energizing a clutch of this type, it is necessary to first fill the clutch hydraulic cavity with hydraulic fluid at a low pressure, such as 10-20 PSI, which compresses the clutch return springs and brings the clutch faces into low pressure sliding engagement. The hydraulic volume necessary to fill the clutch can be up to 10 cubic inches and is variable within any given clutch depending on the amount of residual oil in the clutch at the beginning of fill and the amount of wear on the clutch faces and components. It is desirable to fill the clutch volume rapidly, for example, in .5 seconds or less, therefore, an initial high flow rate is required, for example, 10-20 gallons per minute.

Once the clutch is full, the pressure in the clutch cavity must be linearly increased from the low 10-20 PSI fill pressure to line pressure to bring the clutch faces into non-slipping high pressure engagement. Line pressure is normally high, on order of 150 PSI, but may vary from 60 PSI to 350 PSI.

To de-clutch, it is necessary to linearly reduce the pressure within the clutch from line pressure to zero.

In United States Patent No. 4,617,968, having a common assignee with the present application, there is disclosed an electrohydraulic control system which comprises a spool valve including a body having a bore. A spool is positioned in the bore for reciprocating movement within the bore. The valve body has an inlet, an outlet and an exhaust port. An electrohydraulic three-way normally closed pulse width modulated valve has an inlet communicating with the inlet to the valve body and an outlet communicating with one end of the spool. An electrohydraulic three-way normally closed ON/OFF valve has an inlet communicating with the outlet of the body and an outlet communicating with the other end of the spool. A spring yieldingly urges the spool toward the pulse width modulated valve. The spool is positioned so that it normally obstructs a path from the inlet to the outlet. In such an arrangement, detents are utilized to hold the valve in the full on position. The ON/OFF three-way valve is de-energized to vent fluid pressure insuring the spool remains detented. When the ON/OFF valve is subsequently energized to pressurize the valve, the pressure forces the spool of the detents to de-energize the valve assembly.

Among the objectives of the present invention is to provide an electrohydraulic control system which obviates the need for an ON/OFF valve and incorporates means for preventing undesired metering of fluid to exhaust when the pulse width modulated valve is in the full on position.

In accordance with the invention, the electrohydraulic control system comprises a spool valve including a body having a bore. A spool is positioned in the bore for reciprocating movement within the bore. The valve body has an inlet, an outlet and an exhaust port. An electrohydraulic three-way pulse width modulated valve has an inlet communicating with the inlet to the valve body and an outlet communicating with one end of the spool. A spring yieldingly urges the spool toward the pulse width modulated valve. The spool is positioned so that it normally obstructs a path from the inlet to the outlet. Provision is made for preventing undesirable metering to exhaust when the valve is in the full on position.

## Description of the Drawings

FIG. I is a longitudinal sectional view of an electrohydraulic control system embodying the invention.

FIG 2 is a plan view of the mounting surface for the valve system shown in FIG. I.

FIG. 3 is an end view of the valve system shown in FIG. I.

FIG. 4 is a longitudinal sectional view of a further modified form of electrohydraulic valve system.

FIG. 5 is a plan view of the mounting surface of the valve system shown in FIG. I.

FIGS. 6A, 6B and 6C and FIGS. 7A, 7B and 7C are schematic hydraulic circuits of the hydraulic control system showing the relative positions of the parts in different operative situations.

FIG. 8 is a longitudinal sectional view of another modified form of the electrohydraulic valve system.

FIG. 9 is a plan view of the mounting surface for the valve system shown in FIG. 8.

FIG. IO is an end view of the valve shown in FIG. 8.

## Description

Referring to FIGS. I-3, the electrohydraulic control system comprises a valve body IO with the spool II located in a bore I2. The bore I2 includes an open end I3 in which a three-way pulse width modulated (PWM) valve I4 is positioned. A spring S urges the spool II toward valve I4. The spool II functions to selectively open and close an inlet port I5 and exhaust port I7 and pressure or supply port I6 through relative axial movement of the spool II within the bore I2. Ports I5, I6, I7 extend to a flat mounting surface. Valve I4 may be normally open or normally closed as presently described.

Fluid pressure to control the spool is applied through the PWM valve I4. Pressure output from the PWM valve I4 is applied to one end IIa of the spool II adjacent valve I4 and moves the spool II to the left uncovering inlet port I5 and closing exhaust port I7 and causing fluid communication between inlet port I5 and pressure port I6. Pressure in supply port I6 is communicated through a channel or passage I8 in the form of a groove in the valve body IO to a feedback cavity I9 which commu-

nicates with and acts on the other end IIb of the spool II. A passage 20 in the form of a groove in the valve body IO connects inlet port I5 to the inlet I4a of the PWM valve.

Pressure in the supply port I6 quickly stabilizes equal to the input pressure from the PWM valve I4 since the spool II will seek an equilibrium condition where there is equal force acting on both ends of the spool II. Since there are no detents to hold the spool in the open position, the PWM valve I4 must be energized at all times that a pressure output is required from the spool valve.

Heavy duty automatic transmission clutches have a certain volume that must be filled with oil to bring the clutch faces into sliding contact. Normally this volume is in the range of 2 to IO cubic inches depending on the torque rating of the clutch. The clutches are equipped with return springs that collapse this volume effectively to zero disengaging the clutch faces when pressure is removed. Conversely, to engage the clutch this volume must be filled to a pressure sufficient to overcome the return springs and yet not high enough to fully engage the clutch faces. After the clutch volume is filled the clutch faces are brought into full engagement by linearly increasing the pressure from the fill pressure to line pressure.

With the latching valve disclosed in the aforementioned application Serial No. 7I9,898, any input pressure from the PWM valve tends to fully shift the spool causing high flow until the ON/OFF valve is energized causing the spool to balance with feedback pressure at which point only enough flow is permitted to maintain the pressure balance. To fill the clutch with a high flow rate it is only necessary to energize the PWM valve to some low value with the ON/OFF valve de-energized.

However, with the non-latching valve of the present invention, full feedback pressure is always applied and tends to reduce the flow rate for filling the clutch at low PWM valve duty cycles. In order to rapidly fill the clutch volume the PWM valve is initially turned on to a high duty cycle in the range of 50%-I00% for a predetermined period of time, usually .I to .3 seconds depending on the actual clutch size, and then the duty cycle is reduced to give a pressure output that will maintain the cavity full while holding the clutch faces in sliding contact, normally I5%-30% duty cycle corresponding to I5 PSI - 30 PSI pressure. The duty cycle is then linearly increased from the holding duty cycle to I00% duty cycle to smoothly engage the clutch faces.

Output pressure to the supply port I6 will be less than the PWM signal pressure by the amount of the spring force since in an equilibrium position the force acting on the one end of the spool will be the PWM pressure times the area of end IIa and

the equal opposing force will be the force due to the spring S plus the pressure at output port 16 times the area of end 11b of the spool 11. In the full on position, there will be some metering of fluid to exhaust in order to maintain the force balance. The fluid metered in this manner constitutes a parasitic drain on pump capacity and is therefore undesirable.

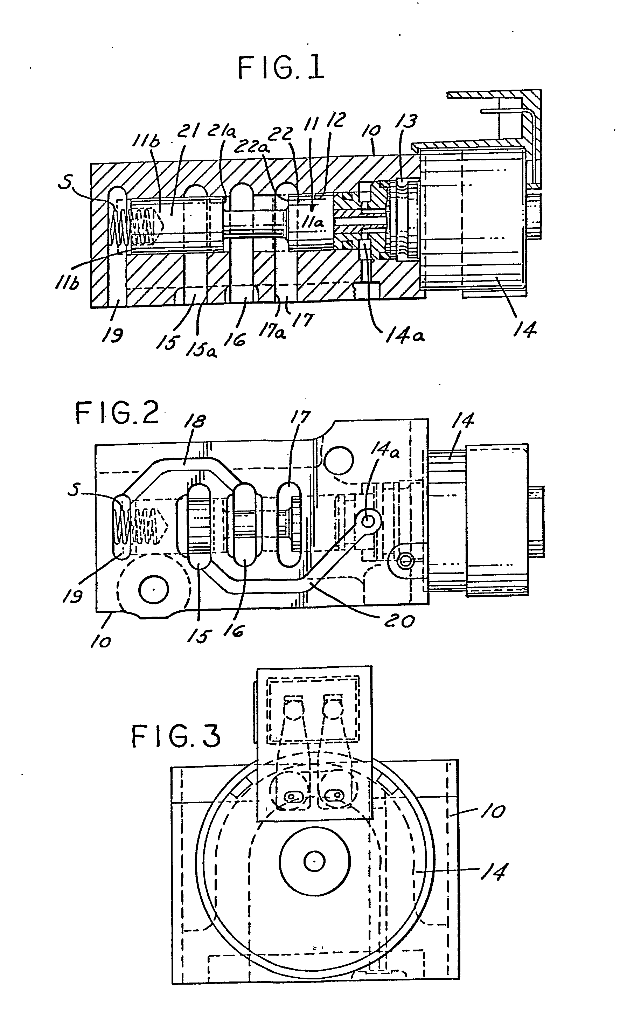

Several methods have been devised to eliminate the metering at full on. A method of eliminating metering to exhaust in the full on position as shown in FIGS. 1 and 2 comprises providing two lands 21 and 22 having the same diameter. In this case, the distance between spool surfaces 21a and 22a is sufficiently shorter than the distance between surfaces 15a and 17a of the inlet port 15 and exhaust port 17, respectively so that the exhaust port 17 is completely closed before the inlet port 15 begins to open as shown in broken lines. The spool 11 is said to be overlapped in this condition. Since the exhaust port 17 is completely shut at all times that the inlet 15 is open, there will be no metering to exhaust. However, the edge 21a of the spool will tend to close against surface 15a to regulate output pressure to less than input pressure by the amount of the spring force. In a typical transmission environment, the force of the spring may equate to about a 5 PSI reduction in line pressure through the valve at full on and since there is no metering of fluid to exhaust, this amount of pressure loss is not objectionable. It has been found that the spool must be overlapped by at least .015 of an inch and less than .100 inch to eliminate metering to exhaust at full on.

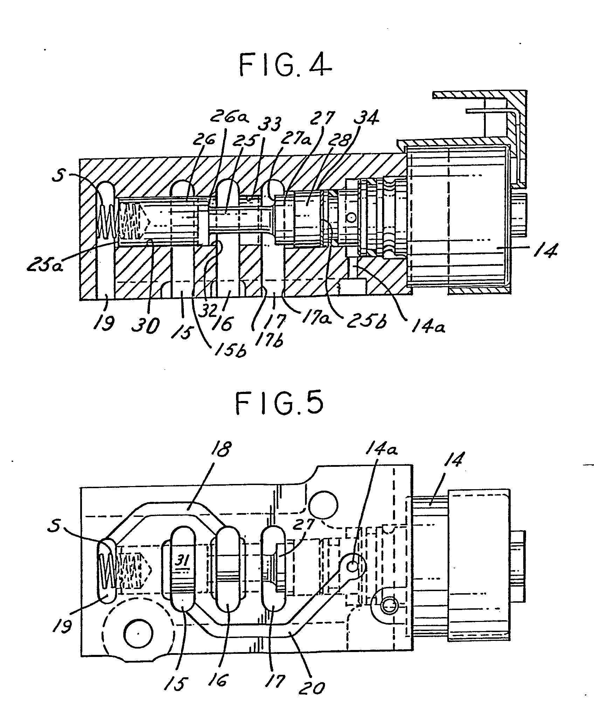

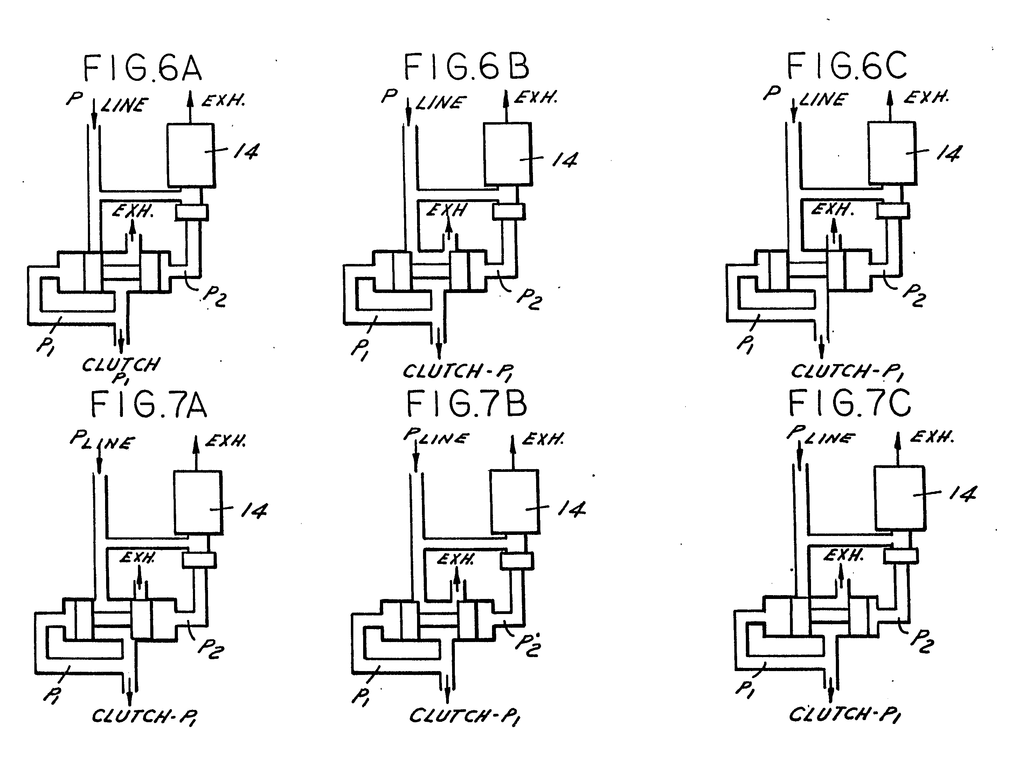

Referring to FIGS. 4 and 5, another method of eliminating metering to exhaust in the full on position is by the construction shown therein wherein a spool 25 has three lands 26, 27 and 28. Lands 26 and 27 have the same diameter while land 28 has a slightly larger diameter, for example, approximately .030 inch larger than the diameters of the lands 26, 27. Bore 30 has bore portions 32, 33 and 34. Bores 30, 32 and 33 have the same diameters as lands 26 and 27 and provide sealing engagement therewith. Bore 34 provides sealing engagement with land 28 and has the same diameter as land 28. An overlap is provided between the land edges 26a, 27a and the bore edges 15b, 17b on the order of .015 inch to .100 inch as shown in broken lines.

With this configuration, as the pressure is applied from the PWM valve 14, the spool 25 moves to the left as viewed in FIG. 4 so that land 27 closes the exhaust port 17 and land 26 uncovers inlet port 15 causing fluid to communicate between supply port 15 and feedback port 19. With the spool 25 in this position, the differential area between land 27 and land 28 is exposed to the pressure at exhaust port 17 which is at sump or zero pressure.

The force acting on the end 25a of spool 25 comprises the spring force plus output pressure from supply port 16 acting on the reduced diameter of land 26. This force is opposed by the pressure of the PWM valve 14 acting on the larger area of the land 28.

This arrangement therefore eliminates the metering to exhaust by using the spool overlap and provides an output pressure that is equal to the PWM valve pressure since the spring force cooperates with the pressure on the reduced diameter and area of the end 25a.

The pulse width modulated valve 14 may be normally closed as shown and described in United States Patent 4,595,035, or normally open as shown and described in United States Patent 4,556,085, both of which have a common assignee with the present application.

Referring to FIGS. 6A, B and C, if the PWM valve 14 is normally closed, the relative positions of the spool in operation are shown.

With the PWM valve 14 (FIG. 6A):    $P$ = the pressure in the inlet pressure port 15

$P_2$ = the pressure at the right end of the spool

$P_1$ = the pressure in the outlet pressure port 16

With PWM valve 14 unenergized and $P_{line}$ greater than 0:    $P_2 = 0$

$P_1 = 0$

With the PWM valve 14 energized at some duty cycle between 10% and 90%:    $P_2 < P_{line}$

$P_1 = P_2$

With the PWM valve 14 energized at 100% duty cycle (FIG. 6C):    $P_2 = P_{line}$

$P_1 = P_{line}$

Referring to FIGS. 7A, B and C, when the valve 14 is a normally open valve, the various positions of the valve are shown.

With PWM valve 14 and $P_{line} > 0$ (FIG. 7A):

$P_2 = P_{line}$

$P_1 = P_{line}$

With PWM valve 14 energized at a duty cycle between 10% and 90%:    $P_2 < P_{line}$

$P_1 = P_2$

With PWM valve energized at 100% duty cycle:

$P_2 = 0$

$P_1 = 0$

It is sometimes desirable to mount the electro-hydraulic control valve system externally. In order to achieve this, the valve must be designed so that it can capture the PWM exhaust.

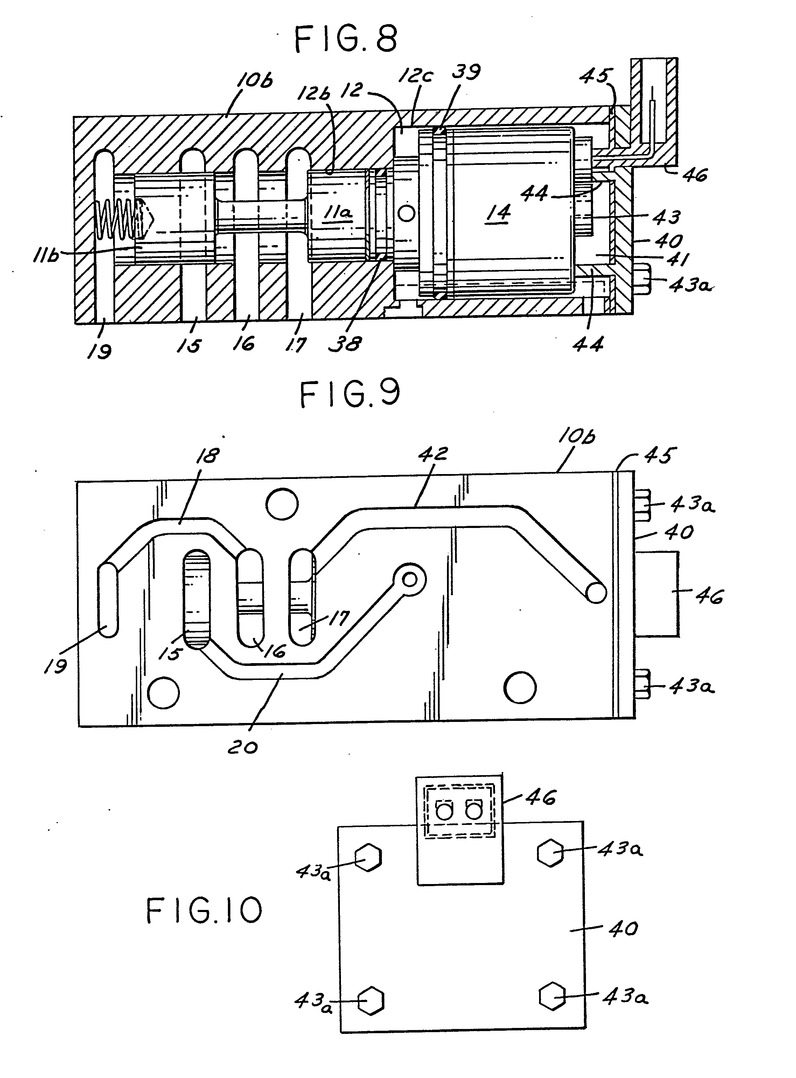

In the forms shown in FIGS. 8-10, the valve housing 10b is provided with bore 12b, and has a large bore 12c that is large enough for the entire PWM valve to fit within it. Bore 12c also acts as a sealing surface for O rings 38 and 39 on the PWM valve 14 to effectively seal inlet cavity 12. Bore 12c is provided with end cap 40 that completely closes the open end of bore 12c forming exhaust cavity 41 which is then connected to exhaust port 17 by conduit 42 in the form of a groove in the body 10b. With this arrangement, any flow from PWM exhaust port 43 will flow into cavity 41 out through conduit 42 to exhaust port 17. Exhaust port 17 is connected directly to the sump of the device being controlled.

End plate 40 is held in place by bolts 43a and is provided with protrusions 44 that bear on the end of PWM valve 14 holding it securely in place. Protrusions 44 can be either individual posts or a ring arrangement that would be perforated to allow oil to pass through it. A gasket 45 and an electrical connector 46 are integrally molded onto end plate 40 to provide a continuous seal for cavity 41.

It can thus be seen that there has been provided an electrohydraulic controlled system which obviates the need for a ON/OFF valve, incorporates means for preventing undesired metering of fluid to exhaust, and in one form encloses the pulse width modulated valve and associated spool in a fluid containing housing.

**Claims**

1. An electrohydraulic control system comprising

a spool valve including a body having a bore and an inlet to said bore,

a spool positioned in the bore for reciprocating movement within the bore,

said valve body having an inlet port, an outlet port and an exhaust port,

an electrohydraulic three-way pulse width modulated valve mounted at one end of said bore, the other end of said valve body being closed,

a feedback passage extending between said supply port and the other end of said bore adjacent the other end of said spool,

a spring yieldingly urging said spool toward said pulse width modulated valve,

said pulse width modulated valve having an inlet,

a passage extending between said inlet of said pulse width modulated valve and said inlet port.

2. The electrohydraulic control system set forth in claim 1 wherein said spool comprises a pair of spaced lands associated with said inlet port, outlet port and exhaust port,

one land being operable to control the inlet port, the other land being operable to control the exhaust port, the outlet port being positioned intermediate said lands,

the distance between said spaced lands being sufficiently shorter than the distance between the inlet port and exhaust port such that the exhaust port is completely closed before the inlet port begins to open.

3. The electrohydraulic control system set forth in claim 1 wherein said spool comprises a first and second land spaced from one another and associated with the inlet port and exhaust port,

a third land adjacent the outlet of the pulse width modulated valve,

said first land and second lands having the same diameter,

said third land having a diameter slightly greater than the diameters of the first land and second land,

said outlet port being positioned intermediate said first land sand second land,

said bore having bore portions of the same diameter as said first, second and third lands, respectively,

said faces of the first and second land edges overlapping the edges of the inlet port and exhaust port such that when the pressure is applied to the pulse width modulated valve, the second land closes the exhaust port and first land uncovers the inlet port permitting fluid to communicate between the outlet port and the feedback passage with the area between the second land and third land being exposed to pressure of the exhaust port.

4. The electrohydraulic control system set forth in any of claims 1-3 wherein the valve body encloses the pulse width modulated valve sealing the pulse width modulated valve,

said body including a passage in the form of a groove extending from the exhaust of the pulse width modulated valve to the exhaust port.

5. The electrohydraulic control system set forth in claim 4 wherein said valve body includes an end cap and means for connecting the end cap to the housing to seal the pulse width modulated valve in said housing,

said end cap having an integral gasket and a connector molded integrally on the end plate and providing a continuous seal.

6. an electrohydraulic control system comprising

a spool valve including a body having a bore,

a spool positioned in the bore for reciprocating movement within the bore,

said valve body having an inlet port, an outlet port and an exhaust port,

an electrohydraulic three-way pulse width modulated valve mounted at one end of said bore having an inlet communicating with the inlet to said valve body at one end of said spool and an outlet and a passage communicating with the other end of said bore adjacent the other end of said spool,

a spring urging said spool toward said valve,

a feedback port in the spring end of said bore,

a first feedback passage in the form of a groove on the exterior of said valve body providing communication between said outlet port and said feedback port,

a second passage in the form of a groove on the exterior of said valve body providing communication between the inlet port and the inlet of said valve,

said pulse width modulated valve being operable to shift said spool to close said exhaust port and open said inlet port to supply fluid to said supply port,

said spool and said exhaust port and inlet port being constructed and arranged such that the exhaust port is completely closed before the inlet port begins to open and the exhaust port is completely closed at all times when the inlet port is open.

7. The electrohydraulic control system set forth in claim 6 wherein said spool comprises a pair of spaced lands associated with said inlet port, outlet port and exhaust port,

the distance between said spaced lands being sufficiently shorter than the distance between the inlet port and exhaust port such that the exhaust port is completely closed before the inlet port begins to open.

8. The electrohydraulic control system set forth in claim 6 wherein said spool comprises a first and a second land spaced from one another and associated with the inlet port and exhaust port,

a third land adjacent the outlet of the pulse width modulated valve,

said third land having a diameter slightly greater than the diameters of the first land and second land,

said bore having bore portions of the same diameter as said first, second and third lands, respectively,

said faces of the first and second land edges overlapping the edges of the inlet port and exhaust port such that if the pressure is applied to the pulse width modulated valve the second land closes the exhaust port and first land uncovers the inlet port permitting fluid to communicate between the outlet port and the first passage with the area between the second land and third land being exposed to pressure at the exhaust port.

9. The electrohydraulic control system set forth in any of claims 6-8 wherein the valve body encloses the pulse width modulated valve sealing the pulse width modulated valve,

said body including a passage in the form of a groove extending from the exhaust of the pulse width modulated valve to the exhaust port.

10. The electrohydraulic control system set forth in claim 9 wherein said valve body includes an end cap and means for connecting the end cap to the housing to seal the pulse width modulated valve in said housing,

said end cap having an integral gasket and a connector molded integrally on the end plate and providing a continuous seal.

FIG.1

FIG.2

FIG.3

0 247 336

## FIG.4

## FIG.5

FIG.6A FIG.6B FIG.6C

FIG.7A FIG.7B FIG.7C

$P_{LINE}$ EXH. 14 $P_2$ CLUTCH-$P_1$ EXH. $P_1$ CLUTCH

# FIG.8

# FIG.9

# FIG.10